# EUROPEAN PATENT APPLICATION

(11) **EP 1 854 352 A2**
(43) Date of publication of application: **14.11.2007**
(21) Application number: 07468003.4
(22) Date of filing: 05.04.2007
(51) Int. Cl.: A01M 29/00

(54) **Device for perventing animals to access window shelves and balcony fences**

(30) Priority: 13.04.2006 SI 200600093
(71) Applicant: Tau Njivar Tomaz, 2000 Maribor (SI)
(72) Inventor: Tau Njivar Tomaz, 2000 Maribor (SI)

(57) **Abstract**

This device physically prevents animals from entering window shelves and balcony fences by horizontally or diagonally installed strings (or ribbons), placed between two or more vertically placed carriers connected by a beam.

## Description

This invention is a device for preventing animals frst of all birds from entering window shelves and balcony fences.

The technical problem, solved by this invention, is physical prevention of the animals' access to window shelves or balcony fences. It works by horizontally (or diagonally) installed strings / ribbons (also called obstacles) which are placed between two carriers over a window shelf and this way they prevent animals form accessing the shelves.

The invention will be further explained in detail by an example of its construction and enclosed sketch which shows:
Sketch 1: a sketch of a device for preventing animals from entering window shelves and balcony fences

The device for preventing animals from entering window shelves and balcony fences is made of two vertical carriers (A), horizontally installed strings (barriers) (B), a beam with setting options (C), amplifiers / intensifiers (D), fixable accessories (F) and springs or elastic material that causes straining of the strings (H).

The device works by setting it on a window shelf or a balcony fence by means of a beam with setting options, and then we set the length of it and set the strings (obstacles) between the vertically placed carriers. After that we strain the strings which physically make it impossible for animals to access the shelf or the balcony. Finally, if it is needed, we fix the device on the shelf or the fence by means of fixable accessories.

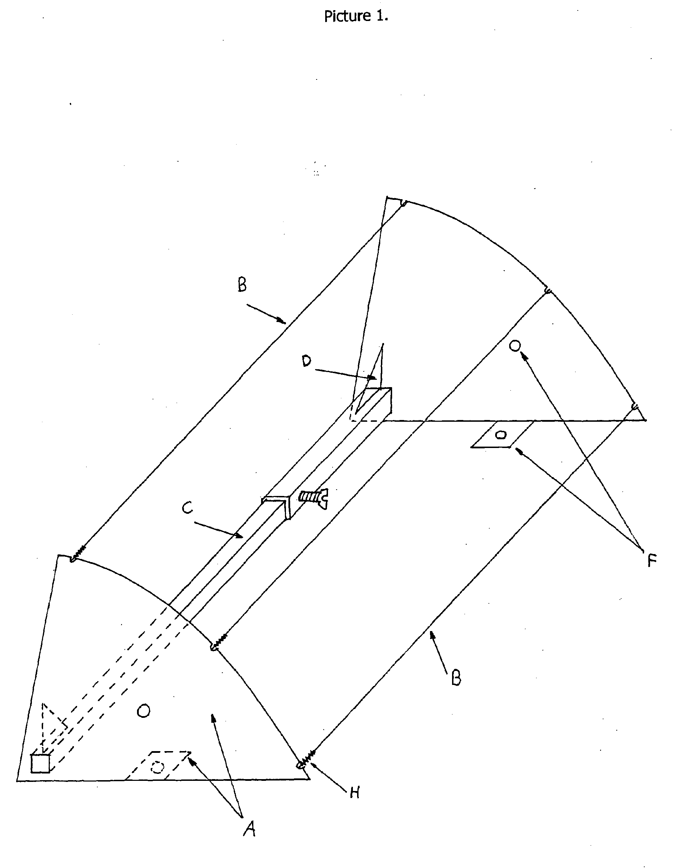

## Claims

1. A device for preventing animals from entering window shelves and balcony fences, made of vertical carriers (A), a beam with setting options (C), horizontally installed strings (barriers) (B), fixable accessories (F) and straining springs (H).

2. A device for preventing animals from entering window shelves and balcony fences according to claim 1, however with possibility of using various numbers of horizontally installed strings (barriers) (B).

3. A device for preventing animals from entering window shelves and balcony fences according to claim 1, however with possibility of using various materials and forms for the installed strings (barriers) (B).

4. A device for preventing animals from entering window shelves and balcony fences according to claim 1, however with possibility of using more vertical carriers (A).

5. A device for preventing animals from entering window shelves and balcony fences according to claim 1, however with possibility of using more set or fixed beams.(C)
